Europäisches Patentamt

European Patent Office

Office européen des brevets

(19)

(11) Veröffentlichungsnummer : **0 384 925 B1**

(12) # EUROPÄISCHE PATENTSCHRIFT

(45) Veröffentlichungstag der Patentschrift :
**22.11.95 Patentblatt 95/47**

(51) Int. Cl.⁶ : **G05B 19/41**

(21) Anmeldenummer : **89103535.4**

(22) Anmeldetag : **28.02.89**

(54) **Steuerungsverfahren bei einer numerischen Werkzeugmaschine oder einem Roboter.**

(43) Veröffentlichungstag der Anmeldung :
**05.09.90 Patentblatt 90/36**

(45) Bekanntmachung des Hinweises auf die
Patenterteilung :
**22.11.95 Patentblatt 95/47**

(84) Benannte Vertragsstaaten :
**CH DE ES FR GB IT LI SE**

(56) Entgegenhaltungen :
**EP-A- 0 254 884**
**EP-A- 0 319 587**
**WO-A-89/00306**
**FR-A- 1 557 915**
**FR-A- 2 393 359**

(56) Entgegenhaltungen :
**PATENT ABSTRACTS OF JAPAN vol. 7, no. 96**
**(P-193)(1241) 22 April 1983, & JP-A-58 22413**
**(AMAO S.K.K.) 9 Februar 1983,**
**PATENT ABSTRACTS OF JAPAN vol. 8, no. 23**
**(P-251)(1460) 31 Januar 1984, & JP-A- 58**
**178406 (MITSUBISHI DENKI KABUSHIKI KAIS-**
**HA) 19 Oktober 1983,**
**VDI-Z 104, Nr.35,1962, Seiten 1806-1813**

(73) Patentinhaber : **SIEMENS**
**AKTIENGESELLSCHAFT**
**Wittelsbacherplatz 2**
**D-80333 München (DE)**

(72) Erfinder : **Armbrüster, Norbert, Dipl.-Ing.**
**Am See 32**
**D-8520 Erlangen (DE)**
Erfinder : **Distler, Heinz, Dipl.-Ing.**
**Am Bauernfeld 13**
**D-8500 Nürnberg (DE)**

## Beschreibung

Die Erfindung bezieht sich auf ein Steuerungsverfahren bei einer numerischen Werkzeugmaschine oder einem Roboter, um Raumpunkte zu bestimmen, zwischen denen interpolierbare Bewegungsabschnitte liegen, wobei sich die Gesamtheit der Bewegungsabschnitte mit einer vorgebbaren Lagetoleranz an eine ideale Bewegungsbahn für die Werkzeugmaschine oder den Roboter annähert, wobei die Bewegungsbahn von einem Ausgangsort als erstem bis zu einem Zielort als letztem Ort der idealen Bewegungsbahn in Feinwegabschnitte aufgelöst ist, wobei Kenngrößen sämtlicher Orte der idealen Bewegungsbahn gespeichert werden und wobei der Ausgangsort als Startpunkt des ersten Bewegungsabschnittes gewählt wird.

Ein derartiges Verfahren ist aus der DE-OS 36 23 070 sowie EP-A-0 254 884 bekannt. Dabei wird eine ideale Bewegungsbahn durch eine Vielzahl von Punkten vorgegeben und innerhalb eines definierten Toleranzbereiches in von einer Steuerung leicht verarbeitbare möglichst wenige lineare Bewegungsabschnitte umgesetzt, deren zu Knickpunkten zusammenstoßende Endpunkte automatisch bestimmt werden. Die Knickpunkte der jeweils resultierenden Bahnen werden dabei so gebildet, daß ein Linearabschnitt von einem Startpunkt zu einem Endpunkt über diesen Endpunkt hinaus verlängert wird und dann außerhalb dieses Abschnittes eine Toleranzbetrachtung durchgeführt wird, indem der Abstand zu einem im weiteren folgenden Ort der Bewegungsbahn auf das Einhalten eines vorgegebenen Grenzwertes überwacht wird. Die entstehenden Knickpunkte auf der zu verfahrenden Bewegungsbahn sind jedoch bei manchen Anwendungsfällen unerwünscht. Aus Gründen des Schonens der Mechanik der Werkzeugmaschine bzw. des Roboters zum Erzielen eines verbesserten Oberflächengüte sowie zum Erreichen höherer Vorschubwerte am Werkstück wäre es nämlich günstiger, wenn die resultierende Bewegungsbahn einen möglichst glatten Kurvenverlauf zeigt.

Ein glatter Kurvenverlauf kann durch ein sogenanntes Spline-Verfahren erzeugt werden, bekannt aus Michaelis' H.: "Interpolationsverfahren mit natürlichem Polynomen im Hinblick auf die Steuerung von Werkzeugmaschinen", VDI-Zeitschrit 104, Nr. 35, 1962, Seiten 1806 bis 1813. Dabei können mit Hilfe weniger Stützpunkte der idealen Bewegungsbahn Splineabschnitte gebildet werden, die in ihrer Gesamtheit einen äußerst glatten Verlauf der resultierenden Bewegungsbahn ergeben. Dies kann beispielsweise so erfolgen, daß die einzelnen Splineabschnitte mit jeweils gleicher Steigung und gleicher Krümmung aneinandergesetzt werden (Werkstatt und Betrieb 121 (1988) 9, Seite 737). Die Splinefunktionen werden mit Standard-Verfahren der Mathematik, z.B. den Verfahren der natürlichen Splines, aus vorgegebenen Stützpunkten oder Linearsätzen berechnet. Verfahrensbeispiele hierzu finden sich in: Keppler M.: "Führungsgrößenerzeugung für numerisch bahngesteuerte Industrieroboter, Kapitel 2.4.3" Springer Verlag, 1984 Berlin, DE. Weiterhin ist aus der EP-A-0 319 587 bekannt, daß zum Erreichen eines gänzlich glatten Verlaufs der resultierenden Bewegungsbahn Splines so aneinandergekettet werden, daß jeweils nicht der Endpunkt eines akzeptierten Splines Ausgangspunkt für einen neuen Spline ist, sondern eine Stützstelle dieses Splines neuer Start für einen sich anschließenden Spline ist.

Je komplexer die zu verfahrenden Bewegungsbahnen und je höher die Qualitätsansprüche sind, deso kürzer werden die einzelnen Splineabschnitte. Dadurch entstehen sehr große Datenmengen, die in der numerischen Steuerung on-line zu verarbeiten sind. Große Datenmengen bedingen jedoch, daß beim Programmablauf die Vorschubgeschwindigkeit reduziert wird, was im Widerspruch zu wirtschaftlichen und technologischen Forderungen steht, sofern nicht leistungsfähigere und damit teuere Hardware eingesetzt wird.

Aufgabe der Erfindung ist es, ein Steuerungsverfahren der eingangs genannten Art so auszubilden, daß mit einer möglichst geringen Anzahl von Splineabschnitten die anzustrebende Bewegungsbahn nachgebildet wird, wobei sichergestellt ist, daß die resultierende Bewegungsbahn nur um einen maximalen Grenzwert in ihrer Lage gegenüber der idealen Bewegungsbahn abweicht.

Gemäß der Erfindung wird diese Aufgabe durch die folgenden Verfahrensschritte gelöst:

a) Unter Zugrundelegung von Kenngrößen des jeweils aktuellen Startpunktes und der durch die Grenzen der unmittelbar folgenden Freinwegabschnitte gegebenen nächsten Orte der idealen Bewegungsbahn werden bis zu einem jeweils aktuellen provisorischen Endpunkt die Parameter eines diesen Kenngrößen zugeordneten Splines ermittelt,

b) unter Zugrundelegung von Kenngrößen des jeweils aktuellen Startpunktes und der durch die Grenzen der unmittelbar folgenden Feinwegabschnitte gegebenen zweitnächsten bzw. beim weiteren Durchlaufen dieses Verfahrensschrittes drittnächsten bzw. n-nächsten Orte der idealen Bewegungsbahn werden bis zu einem jeweils aktuellen provisorischen Endpunkt die Parameter eines diesen Kenngrößen zugeordneten Splines ermittelt,

c) es wird der Abstand von durch ihre Kenngrößen vorgegebenen Orten zwischen dem aktuellen Startpunkt und dem letzten aktuellen provisorischen Endpunkt zum Verlauf des Splines ermittelt,

d) sofern der Abstand einen vorgegebenen Grenzwert nicht überschreitet, werden unter Zugrundelegung des aktuellen Startpunktes und der im Verfahrensschritt b) ausgewählten Orte der idealen Bewegungsbahn bis zu einem dann als letzten aktuell geltenden provisorischen Endpunkt die Parameter eines diesen Kenngrößen zugeordneten Splines ermittelt und es wird wieder auf den Verfahrensschritt c) aufgesetzt,

e) sobald der Grenzwert erreicht oder überschritten wird, wird der dem dabei vorliegenden Spline voranliegende Spline als interpolierbarer Bewegungsabschnitt akzeptiert und

f) sobald der Zielort erreicht worden ist, bilden alle akzeptierten Splines in ihrer Abfolge die Bewegungsbahn ab, während ansonsten ausgehend von einem den zuletzt akzeptierten Spline mitbestimmt habenden Ort als neuem aktuellen Startpunkt wieder auf den Verfahrensschritt a) aufgesetzt wird.

Um die ideale Bewegungsbahn wird sozusagen ein Toleranzschlauch gelegt und die einzelnen Splineabschnitte werden so lange iterativ berechnet, wie sie den Toleranzbereich nicht verlassen. Damit hat die Weite des Toleranzschlauches Einfluß auf die Anzahl der Splineabschnitte, d.h. je weiter der Toleranzschlauch ist, desto weniger Splineabschnitte werden für die Approximation der resultierenden Bewegungsbachn benötigt.

Eine erste vorteilhafte Ausbildung der Erfindung ist dadurch gekennzeichnet, daß der Grenzwert für den Abstand als geometrisches Mittel von mehreren an der Bewegung beteiligten Achsen gebildet wird. Hierbei handelt es sich um ein generelles Toleranzkriterium, das einem in seiner Stärke gleichbleibenden Toleranzschlauch zuzuordnen ist. Wenn dabei Rundachsen beteiligt sind, ist dabei eine Rücktransformation der Maschinenkoordinaten in die Werkkstückkordinaten erforderlich.

Es ist aber auch möglich, daß der Grenzwert für den jeweiligen Abstand achsspezifisch vorgebbar ist. Damit werden einzelne Achsen auf das Einhalten einer vorgegebenen Toleranz überprüft. Bei den zugrundeliegenden Toleranzen kann es sich sowohl um Weg- als auch um Winkelwerte handeln.

Beim Begriff Spline, wird davon ausgegangen, daß hierunter sowohl eine natürliche Biegekurve als auch eine gekrümmte Bahn zu verstehen ist, die durch ein Polynom beschreibbar ist. Demzufolge ist eine weitere vorteilhafte Ausbildung der Erfindung dadurch gekennzeichnet, daß als Kenngrößen für den jeweiligen Spline jeweils vier Ortswerte verwendet sind, durch die ein Polynom dritten Grades spezifizierbar ist. Eben mit einem Polynom dritten Grades lassen sich Splineabschnitte mit unterschiedlichem Krümmungsverhalten und unterschiedlicher Steigung durch weiche Übergänge leicht verbinden. Die Bildung dieses Polynoms kann dabei nach dem sogenannten Newton-Verfahren geschehen ("Bartsch/Mathematische Formeln" Buch- und Zeit-Verlagsgesellschaft mbH, Köln, 1968, S.107).

Wenn die Splineabschnitte jeweils durch die Lage und Neigung der jeweiligen Splineenden bestimmt werden, bietet sich als Verfahren zum Generieren des Splines das eingangs genannte Standard-Splineverfahren an.

Die Parameterisierung der zu verfahrenden Bewegungsbahn erfolgt in vorteilhafter Weise dadurch, daß diese hinsichtlich der verfahrenen Bahnlänge erfolgt. Damit ist sichergestellt, daß Mehrdeutigkeiten (einem x-Wert können unterschiedliche y-Werte zugeordnet werden), wie sie beispielsweise bei einer Spiralbahn in einem kartesischen Koordinatensystem vorliegen würden, vermieden werden. Im letztgenannten Fall wären dann die x- und y-Werte jeweils als eine Funktion einer Bahnlänge s anzugeben.

Ein anschauliches Ausführungsbeispiel der Erfindung ist in der Zeichnung dargestellt und wird im folgenden näher erläutert. Dabei zeigen:

FIG 1          ein Blockschaltbild einer Einrichtung zur Durchführung des erfindungsgemäßen Verfahrens und

FIG 2 bis 5    die Verfahrensschritte, die von einer idealen Bewegungsbahn zur daraus abgeleiteten approximierten Bewegungsbahn führen.

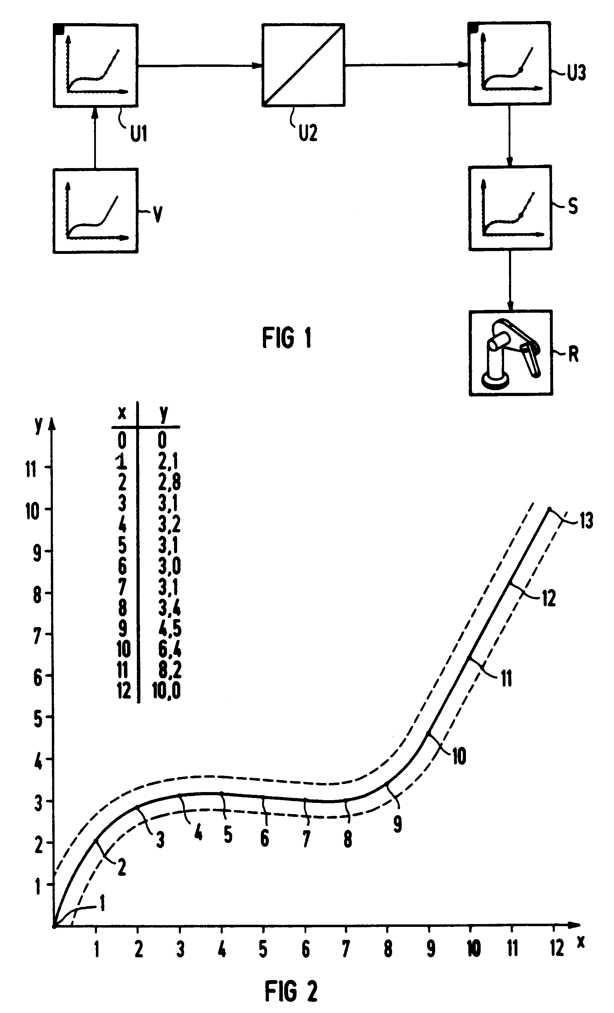

In der Darstellung gemäß FIG 1 ist ein Roboter R gezeigt, dessen Bewegung entsprechend einer idealen Bewegungsbahn gesteuert werden soll, wie diese durch eine Vorlage V angegeben ist. Die Vorlage V, sei es eine Druckvorlage oder ein Modell, wird mit Hilfe eines Umsetzers U1 abgetastet und von diesem Umsetzer U1 wird die ideale Bewegungsbahn von einem Ausgangspunkt als erstem bis zu einem Zielort als letztem Ort in Feinwegabschnitte aufgelöst. Die Feinwegabschnitte können dabei äquidistant zueinander sein. Ferner werden im Umsetzer U1 die Koordinaten sämtlicher Orte der idealen Bewegungsbahn gespeichert. Die gespeicherten Koordinaten gelangen an einen Umsetzer U2, mit dessen Hilfe entsprechend dem erfindungsgemäßen Verfahren einzelne Splineabschnitte ermittelt werden, die als Gesamtheit eine sich mit einer vorgebbaren Lagetoleranz an die ideale Bewegungsbahn approximierende resultierende Bewegungsbahn für einen Roboter R annähern. Die relevanten Größen der einzelnen Splineabschnitte werden im Umsetzer U3 gespeichert und stehen einer Steuerung S für den Roboter R zur Verfügung, wobei die Steuerung S eine Interpolation der aufeinanderfolgenden Splineabschnitte ermöglicht. Die Ausgangssignale der Steuerung S wirken dann auf den Roboter R dementsprechend ein.

In der Darstellung gemäß FIG 2 ist in einem kartesischen Koordinatensystem mit der Abszisse x und der Ordinate y der Verlauf der Kontur der Vorlage V als eine ideale Bahnkurve gezeigt, die von einem Ort 1 im Koordinatenursprung über Orte 2 bis 12 zu einem Zielort 13 führt. Der Übersichtlichkeit halber ist dabei davon ausgegangen, daß die Orte 1 bis 13 in Abszissenrichtung um jeweils eine Wegeinheit delta x voneinander entfernt sind. Dadurch kann das im folgende beschriebene Verfahren aufeinanderfolgender Splineabschnitte in ausgesprochen anschaulicher Weise mit Hilfe des vereinfachten Newton-Verfahrens beschrieben werden.

Durch gestrichelte Linien ist ein Toleranzbereich um die ideale Bewegungsbahn angedeutet, innerhalb dessen eine durch ein zelne Polynome dritten Grades als Splineabschnitte gebildete Bewegungsbahn unbedingt zu bleiben hat. Die Darstellung des Toleranzschlauches und der idealen Bewegungsbahn ist in gleicher Weise auch in den folgenden Figuren beibehalten worden.

Ausgehend von den Orten 1 bis 4 ist es möglich, ein Polynom dritten Grades zu entwickeln, das durch eben diese Orte 1 bis 4 verläuft. Die Wertepaaren von x und y bei der idealen Bewegungsbahn sind dabei einer Tabelle in FIG 2 entnehmbar. Für dieses Polynom ergibt sich demzufolge die Beziehung:

$$y = 0,16 \, x^3 - 1,2 \, x^2 + 3,13 \, x.$$

Da zwischen den Orten 1 und 4 außer den Orten 2 und 3, die auf dem o.a. Polynomzug liegen, keine weiteren Orte vorhanden sind, kann dieser Splineabschnitt als ein solcher angesehen werden, der innerhalb des Toleranzschlauchs liegt. Dieser Splineabschnitt fällt im übrigen mit dem idealen Kurvenverlauf soweit zusammen, daß Abweichungen der Zeichnung nicht entnehmbar wären.

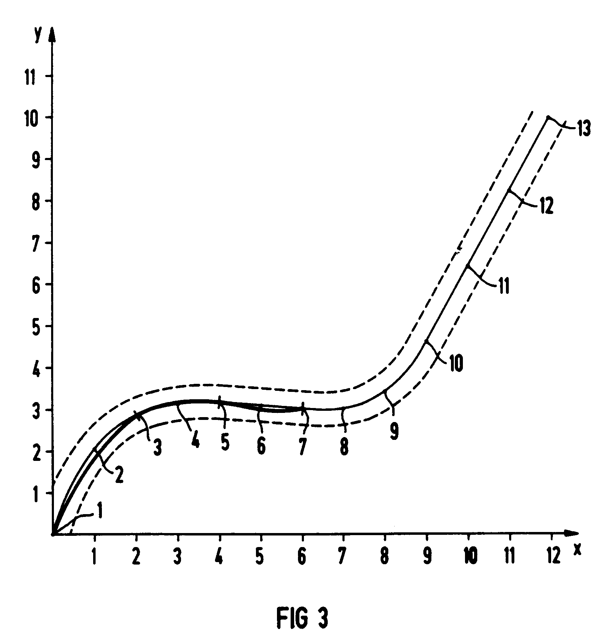

Das Verfahren gemäß der Erfindung schreitet so voran, daß nunmehr ein Splineabschnitt betrachtet wird, der über den Ort 4 hinausgeht. Der Bewegungsabschnitt kann also, wie in FIG 3 gezeigt, vom Ort 1 bis zum Ort 7 als provisorischem Endpunkt sich erstrecken. Dabei wird angenommen, daß die Stützstellen für das Polynom die Orte 1, 3, 5 und 7 sind. Unter Zugrundelegung der Koordinatenwerte für die ideale Bewegungsbahn, wie diese in der Tabelle in FIG 2 angegeben sind, ergibt sich für ein Polynom, das durch eben diese Punkte 1, 3, 5 und 7 verläuft, die Gleichung

$$y = 0,0375 \, x^3 - 0,525 \, x^2 + 2,3 \, x.$$

Der Verlauf dieses Polynoms ist in der Darstellung gemäß FIG 3 durch eine stark ausgezogene Linie hervorgehoben. Man sieht, daß diese Linie schon deutliche Abweichungen vom idealen Ver lauf der Bewegungsbahn aufweist, daß jedoch der Verlauf des Polynoms noch innerhalb des Toleranzschlauches liegt.

Die Abweichung von y-Werten des Polynoms gegenüber Werten für die y-Achse der idealen Bewegungsbahn kann leicht dadurch ermittelt werden, daß beispielsweise für x = 1 der y-Wert des Polynoms bestimmt wird und dieser Wert mit dem Wert von y bei x = 1 der idealen Bewegungsbahn verglichen wird. Dieser resultierende Abstand $y_F$ kann durchaus für sich allein auf einen Schwellwert hin überwacht werden. Wenn sich jedoch der Abstand, wie in der Darstellung gezeigt, als ein Schlauch gleicher Stärke um die ideale Bewegungsbahn ziehen soll, wäre es auch leicht möglich, den geometrisch gemittelten Abstand aus den x- und y-Abweichungen hierzu heranzuziehen.

Relativ einfach ließe sich auch allein anhand der Kenntnis der Abweichung $y_F$ der Abstand ermitteln, indem zunächst die Steigung des Polynoms bestimmt würde, im Ausführungsbeispiel $y' = 0,1125 \, x^2 - 1,05 \, x + 2,3$. Der Abstand ergäbe sich dann als A = $y_F$ . COS(ATN y'). Für x = 1 ergibt sich beispielsweise so ein Abstand von A = 0,1701.

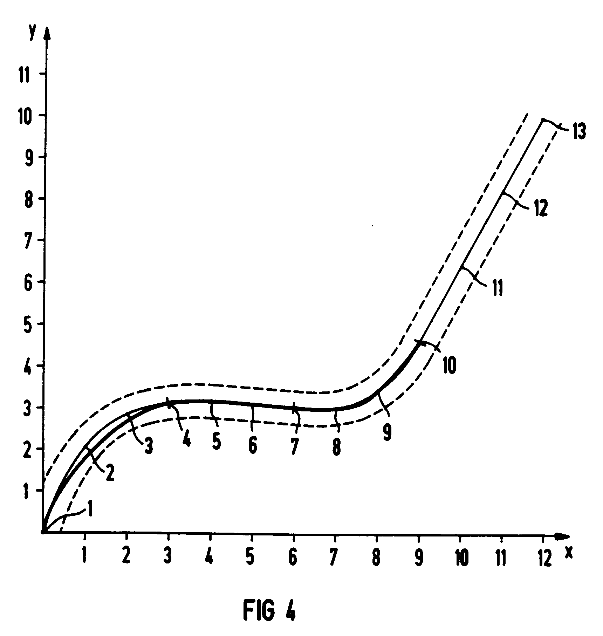

In der Darstellung gemäß FIG 4 ist gezeigt, wie der Verlauf eines Polynoms durch die Orte 1, 4, 7 und 10 verlaufen würde, und auch hier ist ersichtlich, daß das resultierende Polynom einen Verlauf zeigt, der im Toleranzschlauch bleibt.

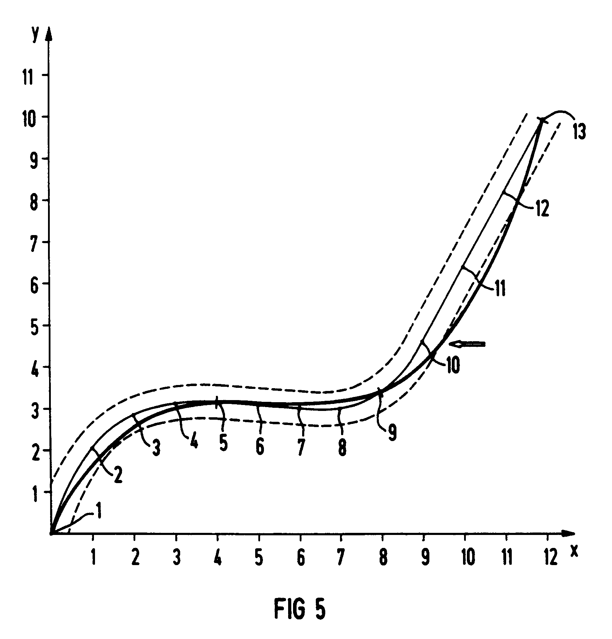

In der Darstellung gemäß FIG 5 zeigt sich jedoch, daß eine weitere Streckung des Splineabschnittes dazu führt, daß ein Polynom, das durch die Orte 1, 5, 9 und 13 verläuft, den Toleranzbereich verläßt. Dies ist in der Darstellung durch einen offenen Pfeil zwischen den Orten 10 und 11 gezeigt. Dies führt dann dazu, daß der Verlauf dieses aktuellen Splineabschnittes nicht gewertet wird, sondern daß der Verlauf des vorangegangenen Splineabschnittes für die Bildung der resultierenden Bewegungsbahn berücksichtigt wird. Es kann demzufolge der akzeptierte Splineabschnitt zwischen den Orten 1 und 10 in der Steuerung registriert werden und ab Ort 10 könnte das Verfahren in dar oben geschilderten Weise neu beginnen.

Dies würde unter Umständen jedoch dazu führen, daß am Ort 10 immer noch ein geringer Knick auftaucht und so bietet es sich gemäß der Erfindung an, daß der Splineabschnitt zwischen den Orten 1 und 10 zwar als ausreichend genau anerkannt wird, daß jedoch der nächste Splineabschnitt nicht erst am Punkt 10 ansetzt, sondern auf einem auf diesem Splineabschnitt liegenden Ort, z.B. am Ort 7. Von diesem Ort an, der ein Stützpunkt zum Generieren des zugehörigen Splineabschnittes war, würde dann das eingangs geschilderte Verfahren neu beginnen.

Anstelle des betriebenen Newton-Verfahrens ist selbstverständlich auch das Verfahren der natürlichen Splines anwendbar. Dabei könnten auch in diesem Fall zunächst ausreichend genaue Splines ermittelt werden, die innerhalb des Toleranzschlauches liegen und dann die nachfolgenden Splines ausgehend von einem Ort des vorangegangenen Splineabschnittes neu starten. Dadurch, daß beim Verfahren der natürlichen Splines die Parameter Anfang und Ende des Splineabschnittes und Krümmung, Neigung am Anfang und Ende des Splineabschnittes einfließen, wird bei diesem Verfahren mit absoluter Sicherheit vermieden, daß überhaupt irgendwelche Kanten auf der resultierenden Bewegungsbahn entstehen können.

**Patentansprüche**

1. Steuerungsverfahren bei einer numerischen Werkzeugmaschine oder einem Roboter (R), um Raumpunkte zu bestimmen, zwischen denen funktionsmäßig beschreibbare, interpolierbare Bewegungsabschnitte liegen, wobei sich die Gesamtheit der aneinandergefügten Bewegungsabschnitte mit einer vorgebbaren Lagetoleranz an eine ideale Bewegungsbahn für die Werkzeugmaschine oder den Roboter (R) annähert, wobei die ideale Bewegungsbahn von einem Ausgangsort (1) als Startpunkt des ersten Bewegungsabschnittes bis zu einem Zielort (13) als letztem Ort der idealen Bewegungsbahn in unmittelbar aufeinanderfolgende Feinwegabschnitte aufgelöst ist, wobei Kenngrößen (x,y) sämtlicher Orte (1 bis 13) der idealen Bewegungsbahn gespeichert vorliegen, **gekennzeichnet** durch die folgenden Verfahrensschritte:
   a) Unter Zugrundelegung von Kenngrößen des jeweils aktuellen Startpunktes (1) und der durch die Grenzen der unmittelbar folgenden Feinwegabschnitte gegebenen nächsten Orte (2,3, 4) der idealen Bewegungsbahn werden bis zu einem jeweils aktuellen provisorischen Endpunkt (4) die Parameter eines diesen Kenngrößen zugeordneten Splines ermittelt,
   b) unter Zugrundelegung von Kenngrößen des jeweils aktuellen Startpunktes (1) und der durch die Grenzen der unmittelbar folgenden Feinwegabschnitte gegebenen zweitnächsten bzw. beim weiteren Durchlaufen dieses Verfahrensschrittes drittnächsten bzw. n-nächsten Orte (3,5,7 bzw. 4,7,10 bzw. 5,9,13) der idealen Bewegungsbahn werden bis zu einem jeweils aktuellen provisorischen Endpunkt (7,10,13) die Parameter eines diesen Kenngrößen zugeordneten Splines ermittelt,
   c) es wird der Abstand von durch ihre Kenngrößen vorgegebenen Orten (1 bis 13) zwischen dem aktuellen Startpunkt (1) und dem letzten aktuellen provisorischen Endpunkt (7,10,13) zum Verlauf des Splines ermittelt,
   d) Sofern der Abstand einen vorgegebenen Grenzwert nicht überschreitet, werden unter Zugrundelegung des aktuellen Startpunktes (1) und der im Verfahrensschritt b) ausgewählten Orte (4,7,10) der idealen Bewegungsbahn bis zu einem dann als letzten aktuell geltenden provisorischen Endpunkt (10) die Parameter eines diesen Kenngrößen zugeordneten Splines ermittelt und es wird wieder auf den Verfahrensschritt c) aufgesetzt,
   e) sobald der Grenzwert erreicht oder überschritten wird, wird der dem dabei vorliegenden Spline voranliegende Spline als interpolierbarer Bewegungsabschnitt akzeptiert und
   f) sobald der Zielort (13) erreicht worden ist, bilden alle akzeptierten Splines in ihrer Abfolge die Bewegungsbahn ab, während ansonsten ausgehend von einem den zuletzt akzeptierten Spline mitbestimmt habenden Ort (10) als neuem aktuellen Startpunkt wieder auf den Verfahrensschritt a) aufgesetzt wird.

2. Verfahren nach Anspruch 1, **dadurch gekennzeichnet,** daß der Grenzwert für den Abstand als geometrisches Mittel von mehreren an der Bewegungsbahn beteiligten Achsen gebildet wird.

3. Verfahren nach einem der vorstehenden Ansprüche, **dadurch gekennzeichnet,** daß der Grenzwert für den jeweiligen Abstand achsspezifisch vorgebbar ist.

4. Verfahren nach einem der vorstehenden Ansprüche, **dadurch gekennzeichnet,** daß als Kenngrößen für den jeweiligen Spline jeweils vier Ortswerte verwendet sind, durch die ein Polynom dritten Grades spezifizierbar ist.

5. Verfahren nach einem der vorstehenden Ansprüche, **dadurch gekennzeichnet,** daß die Splines jeweils durch die Lage und Neigung bzw. Krümmung der jeweiligen Spline-Endpunkte bestimmt werden.

6. Verfahren nach einem der vorstehenden Ansprüche, **dadurch gekennzeichnet,** daß eine Parameterisierung hinsichtlich der verfahrenen Bahnlänge erfolgt.

**Claims**

1. Control process for a numerically controlled machine-tool or a robot (R) for the determination of tool centre points between which are located motion segments which can be functionally described and interpolated, the totality of the connected motion segments approximating to an ideal path of motion for the machine-tool or robot (R) within a specified tolerance with respect to the position, this ideal path of motion being divided into immediately successive fine path segments, from a point of origin (1) as a starting point of the first motion segment to a target position (13) as a last position of the ideal path of motion, there being stored characteristic quantities (x,y) of all positions (1 to 13) on the ideal path of motion, characterized by the following process steps:

a) Taking as a basis characteristic quantities of a given current starting point (1) and of the next positions (2,3,4) on the ideal path of motion defined by the limits of the immediately succeeding fine path segments, the parameters of a spline assigned to these characteristic quantities are determined up to a given current provisional end point (4).

b) Taking as a basis characteristic quantities of a given current starting point (1) and of the second-next positions, or, in further repetition of this process step, third-next or n-next positions (3,5,7 or 4,7,10 or 5,9,13) on the ideal path of motion defined by the limits of the immediately succeeding fine path segments, the parameters of a spline assigned to these characteristic quantities are determined up to a given current provisional end point (7,10,13).

c) The distance from the curve of the spline is determined for positions (1 to 13), defined by their characteristic quantities, lying between the current starting point (1) and the last current provisional end point (7,10,13).

d) Provided that the distance does not exceed a defined limiting value, taking as a basis the current starting point (1) and the positions (4,7,10), selected in process b), of the ideal path of motion up to what is then the last currently valid provisional end point (10), the parameters of a spline assigned to these characteristic quantities are determined and the process is repeated from step c).

e) As soon as the limiting value is reached or exceeded, the spline preceding the spline in question is accepted as a motion segment capable of interpolation

f) As soon as the target position (13) is reached, the path of motion is mapped by the sequence of all accepted splines, otherwise the process is repeated from step a) starting from a position (10) agreed as including the last accepted spline as a new current starting point.

2. Process according to Claim 1, characterized in that the limiting value for the distance is formed as a geometric mean from several axes included in the path of motion.

3. Process according to either of the preceding Claims, characterized in that the limiting value of a given distance can be specified for each axis.

4. Process according to any one of the preceding Claims, characterized in that four positional values are used as the characteristic quantities for a given spline, these four values being used to specify a third-degree polynomial.

5. Process according to any one of the preceding Claims, characterized in that the splines are each determined by the position and slope or curvature of the respective spline end points.

6. Process according to any one of the preceding Claims, characterized in that parameterization is accomplished in respect of the travelled path length.

## Revendications

1. Procédé de commande dans une machine-outil numérique ou un robot (R), pour déterminer des points de l'espace entre lesquels sont situés des sections de déplacement pouvant être décrits de façon fonctionnelle et pouvant être interpolés, selon lequel la totalité des sections de déplacement contigus est approximée avec une tolérance de position pouvant être prédéterminée, par une trajectoire idéale de déplacement pour la machine-outil ou le robot (R), la trajectoire idéale de déplacement étant subdivisée en petites sections de déplacement directement successives, depuis un lieu de départ (1) en tant que point de départ de la première section de déplacement jusqu'à un lieu de destination (13) en tant que dernier lieu de la trajectoire idéale de déplacement, des grandeurs caractéristiques (x,y) de tous les lieux (1 à 13) de la trajectoire idéale de déplacement étant présents sous forme mémorisée, caractérisé par les étapes opératoires suivantes :

a) sur la base de grandeurs caractéristiques du point de départ actuel (1) et des lieux suivants (2,3,4) de la trajectoire idéale de déplacement, déterminés par les limites de petites sections de déplacement directement successives, les paramètres d'une spline (ligne) associée à ces grandeurs caractéristiques sont déterminés jusqu'à un point actuel final provisoire (4),

b) à partir de grandeurs caractéristiques du point de départ actuel (1) et du lieu directement suivant en second ou du lieu directement suivant en troisième position ou du lieu directement suivant en n-ème position (3,5,7 ou 4,7,10 ou 5,9,13), lors de l'exécution ultérieure de cette étape opératoire, de la trajectoire idéale de déplacement, lieux qui sont définis par les limites de petites sections de déplacement directement successives, les paramètres d'une spline associée à ces grandeurs caractéristiques sont déterminés jusqu'à un point final actuel provisoire (7,10, 13),

c) la distance de lieux (1 à 13), prédéterminés par leurs grandeurs caractéristiques, entre le point de départ actuel (1) et le dernier point final actuel provisoire (7,10,13) et le tracé de la spline est déterminée,

d) dans la mesure où la distance ne dépasse pas une valeur limite prédéterminée, les paramètres d'une spline associée à ces grandeurs caractéristiques sont déterminés sur la base du point de départ actuel (1) et des lieux (4,7,10) de la trajectoire idéale de déplacement, sélectionnés dans l'étape opératoire b), jusqu'à un point final provisoire (10) valable alors en tant que dernier point final actuel, l'étape opératoire c) est à nouveau exécutée,

e) dès que la valeur limite est atteinte ou dépassée, la ligne, qui précède la présente ligne, est acceptée en tant que section de déplacement pouvant être interpolée, et

f) dès que le lieu de destination (13) a été atteint, toutes les splines acceptées reproduisent, dans leur succession, la trajectoire de déplacement alors que, sinon, on revient à l'étape opératoire a) à partir d'un lieu (10) définissant conjointement la spline acceptée en dernier lieu, en tant que nouveau point de départ actuel.

2. Procédé suivant la revendication 1, caractérisé par le fait que la valeur limite pour la distance est formée en tant que moyenne géométrique de plusieurs axes intervenant dans la trajectoire de déplacement.

3. Procédé suivant l'une des revendications précédentes, caractérisé par le fait que la valeur limite pour la distance respective peut être prédéterminée d'une manière spécifique aux axes.

4. Procédé suivant l'une des revendications précédentes, caractérisé par le fait qu'on utilise respectivement, comme grandeur caractéristique pour la spline respective, quatre valeurs de lieu, au moyen desquelles un polynôme du troisième degré peut être spécifié.

5. Procédé suivant l'une des revendications précédentes, caractérisé par le fait que les splines sont déterminées respectivement par la position, l'inclinaison ou la courbure des points finals respectifs de ces splines.

6. Procédé suivant l'une des revendications précédentes, caractérisé par le fait qu'un paramétrage est exécuté en rapport avec la longueur de trajectoire parcourue.

FIG 1

| x  | y    |
|----|------|
| 0  | 0    |
| 1  | 2,1  |
| 2  | 2,8  |
| 3  | 3,1  |
| 4  | 3,2  |
| 5  | 3,1  |
| 6  | 3,0  |
| 7  | 3,1  |
| 8  | 3,4  |
| 9  | 4,5  |
| 10 | 6,4  |
| 11 | 8,2  |
| 12 | 10,0 |

FIG 2

FIG 3

FIG 4

FIG 5